# EUROPEAN PATENT APPLICATION

(11) **EP 1 518 640 A1**
(43) Date of publication of application: **30.03.2005**
(21) Application number: 04022147.5
(22) Date of filing: 17.09.2004
(51) Int. Cl.: B23Q 16/10

(54) **Device for controlling a rotatable member**

(30) Priority: 25.09.2003 IT TO20030745
(71) Applicant: Zona Engineering & Design S.a.s., 10133 Torino (IT)
(72) Inventor: Zona, Mauro, 10134 Torino (IT)
(74) Representative: Gallarotti, Franco

(57) **Abstract**

A rotatable member (2) with respect to a stationary frame (1) can be blocked in the position it has reached at the end of one of its rotations by a mutual engagement of two sets of front teeth (3, 5) carried by the stationary frame (1) and by the rotatable member (2), respectively. The crown wheel (3) carried by the stationary frame (1) can be adjusted in angular position so as to enable to block the rotatable member whatever the final position reached at the end of rotation.

## Description

The present invention relates to the field of control devices for rotatable members, comprising
- a stationary frame,
- a member mounted rotatably onto said stationary frame around a rotation axis,
- first motor means for controlling rotation of said rotatable member, and
- a device for blocking the rotatable member in the position reached at the end of one of its rotations,
in which said blocking device comprises:
- a first crown wheel with front teeth carried by said stationary frame, and
- a second crown wheel with front teeth carried by the rotatable member,
- said first and second crown wheels being able to move one with respect to the other in an axial direction parallel to the rotation axis of the rotatable member, between a distanced condition in which the rotatable member can freely rotate, and a close position of mutual engagement in which the rotatable member is kept away from rotation.

Devices like those referred to above have been known and used for a long time in technical applications.

For instance, applications of such devices have been proposed in the field of machine tools. For instance, document US-A-4 159 658 discloses a device of this type, in which two crown wheels with front teeth get into mutual engagement so as to block in position a rotatable member of the machine after said member has been stopped.

Devices proposed until now in the technical field cannot however solve a further problem. When the blocking device is activated in order to block the rotatable member in a given position, this results - as was said - in a mutual approach in axial direction of the first and second crown wheels, which thus engage with each other. Obviously, during the mutual engagement of said crown wheels, these have to be in mutual adjustment, i.e. the teeth of a crown wheel should be received into the openings between the teeth of the other crown wheel, without any collision between their respective teeth taking place. In the devices proposed until now, said problem does not exist actually, since they provide (see US-A-4 159 658) that the rotation imparted to the rotatable member always corresponds to a multiple of the pitch of crown wheel teeth. Therefore, in said known solution, whatever the final position reached by the rotatable member, it is ensured that the two crown wheels designed to engage with each other are also correctly adjusted.

The present invention aims conversely at solving in a simple and reliable way the problem involving the blocking of a rotatable member, which can be stopped in any position, rotated of an angle also not corresponding to a multiple of teeth pitch with respect to starting position. In other words, the aim underlying the present invention is to carry out a control device as referred to at the beginning, which can ensure the blocking of the rotatable member whatever its final position reached after a rotation, therefore in particular also when in said final position the teeth of the crown wheel associated to the rotatable member are not in an angular position of correct engagement with respect to the teeth of the crown wheel associated to the stationary frame.

A further aim of the present invention is to carry out a device as referred to above, which can achieve the result referred to above ensuring a high operating accuracy, and therefore without being related in particular to risks of slight shifts of the rotatable member with respect to the position reached after rotation, after the intervention of the blocking device, for instance due to construction clearances or manufacturing tolerances.

In the light of achieving these and other aims, the object of the invention is a device for controlling a rotatable member having the characteristics referred to at the beginning of the present invention, and further characterized in that the angular position around said rotation axis of the aforesaid first crown wheel, with respect to the stationary frame, is adjustable.

More specifically, according to the invention the first crown wheel is mounted with the possibility of at least a limited rotation onto said stationary frame around an axis coinciding with said rotation axis of the rotatable member, and it is provided for second motor means for controlling an adjusting rotation of the first crown wheel around said rotation axis.

Still more specifically, according to the invention the device further comprises:
- first sensor means enabling to define, either directly or indirectly, the angular position reached by the second crown wheel at the end of a rotation of the rotatable member,
- second sensor means enabling to define, either directly or indirectly, the angular position of said first crown wheel, and
- control means for controlling said second motor means depending on the output signals of the first and second sensor means, in order to position the first crown wheel with its teeth adjusted with respect to the openings between the teeth of the second crown wheel, and thus enable the mutual engagement of said crown wheel in said close condition.

In the preferred embodiment of the invention, the device further comprises a third crown wheel, stiffly connected to the rotatable member and arranged coaxially to the first crown wheel, so that in the aforesaid close condition the second crown wheel engages both said first crown wheel and said third crown wheel.

Still in the case of the aforesaid preferred embodiment, the first, second and third crown wheels have the same number of teeth. Moreover, still in the case of said preferred example, the first and third crown wheels are axially stationary, whereas the second crown wheel is axially moving between the aforesaid distanced condition and the aforesaid close condition.

Thanks to the characteristics referred to above, the device according to the invention can ensure the blocking of the rotatable member after a stop at the end of a rotation, whatever the final position reached by the rotatable member, and in particular also in case in said final position the teeth of the crown wheel carried by the rotatable member are not adjusted with respect to the openings between the teeth of the crown wheel carried by the stationary frame. As a matter of fact, in such a case an adjusting rotation of the crown wheel carried by the stationary frame with respect to the latter can be activated until said crown wheel reaches an angular position adjusted with respect to the one of the crown wheel carried by the rotatable member.

In the preferred embodiment, moreover, the use of a third crown wheel ensures a particularly accurate operation of the device, even in case of unavoidable clearances related to the system for guiding the axial movement of the second crown wheel. As a matter of fact, the third crown wheel stiffly connected to the rotatable member ensures that in the condition of teeth mutual engagement no positioning error due to the engagement between the first and second crown wheels occurs, since the latter should also engage said third crown wheel, whose position with respect to the rotatable member is strictly ensured.

Still in the case of the preferred example of embodiment, the second motor means controlling the adjusting movement of the crown wheel carried by the stationary frame are connected to the aforesaid crown wheel preferably by means of a drive including an eccentric cam mechanism.

Further characteristics and advantages will be evident from the following description with reference to the accompanying drawings, provided as a mere nonlimiting example, in which:

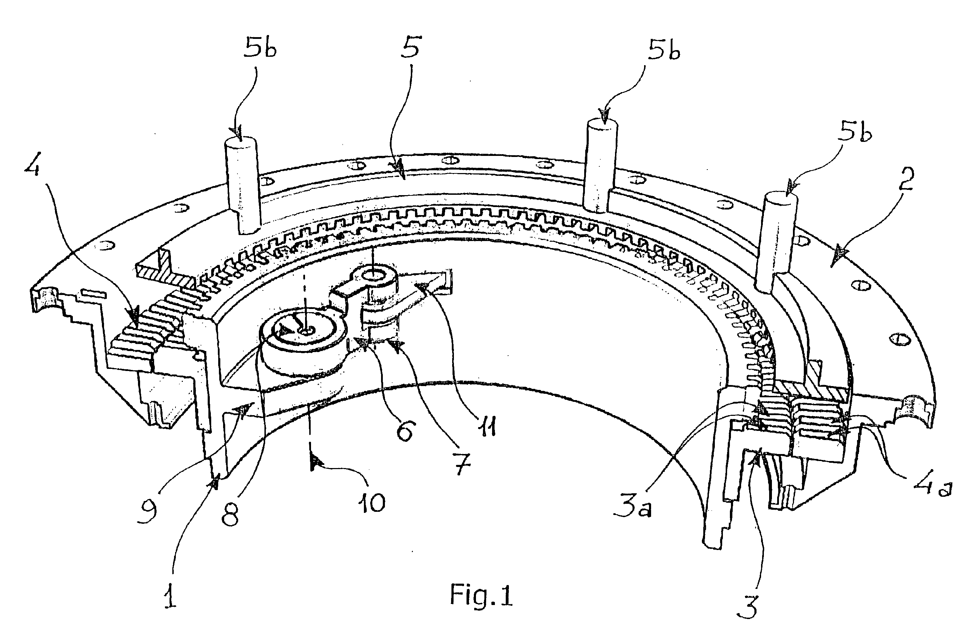

- Figure 1 is a schematic partial perspective view of a control device according to the invention,

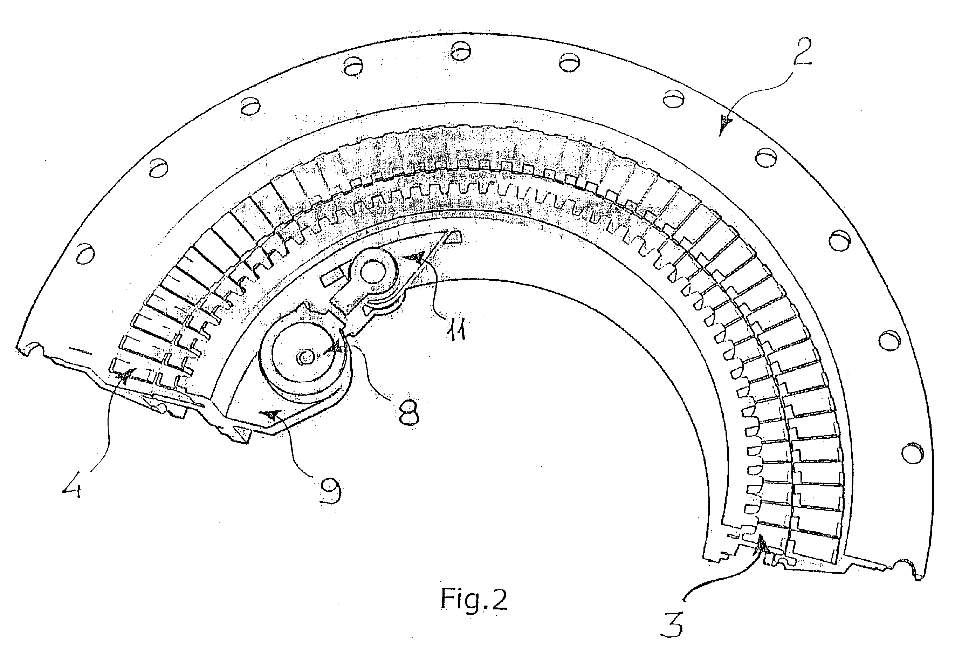

- Figure 2 is a plan view of the device of Figure 1,
- Figure 3 is a schematic sectional view of the device of Figure 1, and

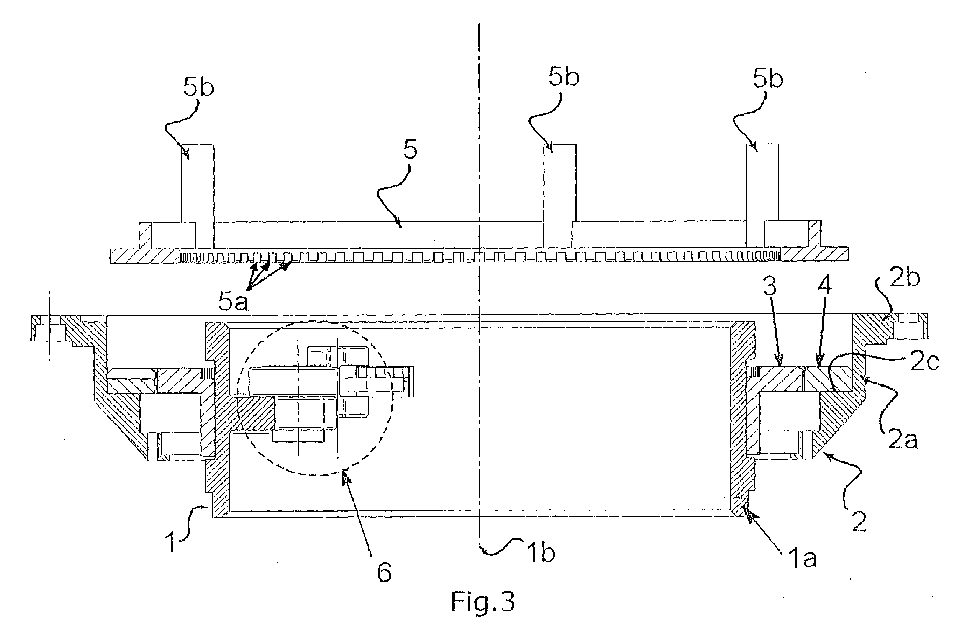

- Figure 3 is a block diagram of the control system of the device.

With reference to the drawings, number 1 refers as a whole to a device for controlling the rotation of a rotatable member. The device according to the invention has a general application in the technical field. However, it preferably applies to devices requiring high accuracy in the stop position of the rotatable member. For instance, the invention can apply in a particularly advantageous manner to rotatable platforms for the support of adjustable structures such as for instance radar stations or antennas.

In the drawings, number 1 refers to a stationary supporting frame comprising a cylindrical hub 1a, having a vertical symmetry axis 1b. On the stationary supporting frame 1 a member 2 is mounted rotatably around axis 1b, said member comprising in the example shown a ring-shaped wall 2a ending upwards with a ring-shaped flat flange 2b.

The hub 1a of the stationary supporting frame 1 is stiffly connected to a crown wheel 3, arranged coaxially outside the wall of hub 1b and having a plurality of front teeth 3a.

The accompanying drawings do not show construction details concerning the manner in which the rotatable member 2 is supported on the stationary frame 1, nor do they show details concerning the motor controlling the rotation of the rotatable member 2 and its mechanical drive. Such details can be implemented in any known way and do not fall per se within the framework of the present invention. On the other side, the drawings can be promptly and easily understood if such details are eliminated from them.

The rotatable member 2 is stiffly connected to a crown wheel 4 arranged coaxially outside crown wheel 3 and having the same number of teeth 4a. As can be clearly seen on Figure 3, crown wheel 4 is carried by a flat surface 2c perpendicular to axis 1b and defined by the inner surface of the ring-shaped wall 2a of the rotatable member in such a position that crown wheels 3, 4 are arranged basically on the same plane.

Eventually, number 5 refers to a third crown wheel, which is arranged as well coaxially to crown wheels 3, 4 and to hub 1a and rotatable member 2, and which has a plurality of front teeth 5a whose number is the same as the teeth of crown wheels 3, 4. Crown wheel 5 is carried by rotatable member 2, but it is mounted slidingly with respect to the latter a direction parallel to axis 1a. To this purpose, in the case shown in the example, the structure of crown wheel 5 includes axial pins 5b designed to be guided slidingly inside corresponding guiding cavities (not shown) made in a structure (not shown) belonging to rotatable member 2.

It should finally be pointed out that the stationary frame 1 is not stiffly connected to but it is supported by the latter.so as to be able to rotate around rotation axis 1b. Therefore, the angular position of crown wheel 3 with respect to stationary frame 1 can be adjusted. To this purpose, it is provided for an eccentric cam mechanism 6 including a lever 7 with a rotatable end on an eccentric cam 8 mounted rotatably onto a bracket 9 of stationary frame 1 and whose rotation around an axis 10 is controlled through motor means (not shown). The end of lever 7 opposite the rotatable end on eccentric cam 8 is shaped as a fork and is jointed to a bracket 11 stiffly connected to the structure of crown wheel 3 and protruding radially into hub 1a through a slot 12. When a rotation of eccentric cam 8 should occur, lever 7 moves with respect to axis 10 so as to transmit a movement of slight rotation to crown wheel 3 around rotation axis 1b. As shall be evident also from the following description, said adjusting rotation is made so as to adjust crown wheel 3 with respect to the two crown wheels 4 and 5 after the rotatable member has stopped at the end of a rotation step, if in said position the teeth of crown wheel 5 are not in the openings of crown wheel 3. Obviously, since all crown wheels have the same number of teeth and accordingly the same angular pitch, the angular rotation to be imparted to crown wheel 3 can be at most half of teeth pitch and is therefore quite limited.

During operation, when rotatable member 2 is in rotation, crown wheels 4, 5 rotate together with it. Obviously, said crown wheels 4, 5 are mounted onto rotatable member 2 so that their teeth have the same angular position. When the rotation of rotatable member 2 is interrupted, the latter can be in a position in which the teeth of crown wheels 4 and 5 are obviously adjusted to one another, but are not adjusted with respect to the teeth of crown wheel 3. In such a case, a control is sent to eccentric cam mechanism 6 so as to cause an adjusting rotation of crown wheel 3 carrying teeth 3a and have the same angular positions as teeth 4a of crown wheel 4 and as the openings between teeth 5a of crown wheel 5. In such a condition, crown wheel 5 can be lowered so as to engage crown wheels 3, 4, thus creating a connection against rotation between rotatable member and stationary frame.

Although from a theoretical point of view the device according to the invention can use only two crown wheels, and namely crown wheels 3 and 5, the use of three crown wheels ensures a more accurate operation. As a matter of fact, the angular position of crown wheel 5 with respect to rotatable member 2 cannot be ensured in an extremely strict manner, since axial sliding guides of crown wheel 5 are always necessarily characterized by a given clearance. Conversely, crown wheel 4 is in a strictly defined position with respect to the rotatable member. Therefore, during the engagement of crown wheel 5 onto crown wheels 3, 4 crown wheel 4 ensures that the position reached by rotatable member 2 is maintained accurately, without the danger of slight misalignments or clearances.

The present description and the drawings do not disclose means for controlling the axial movement of crown wheel 5, nor motor means controlling eccentric cam mechanism 6. Obviously, construction details related to said elements can be implemented in any known manner.

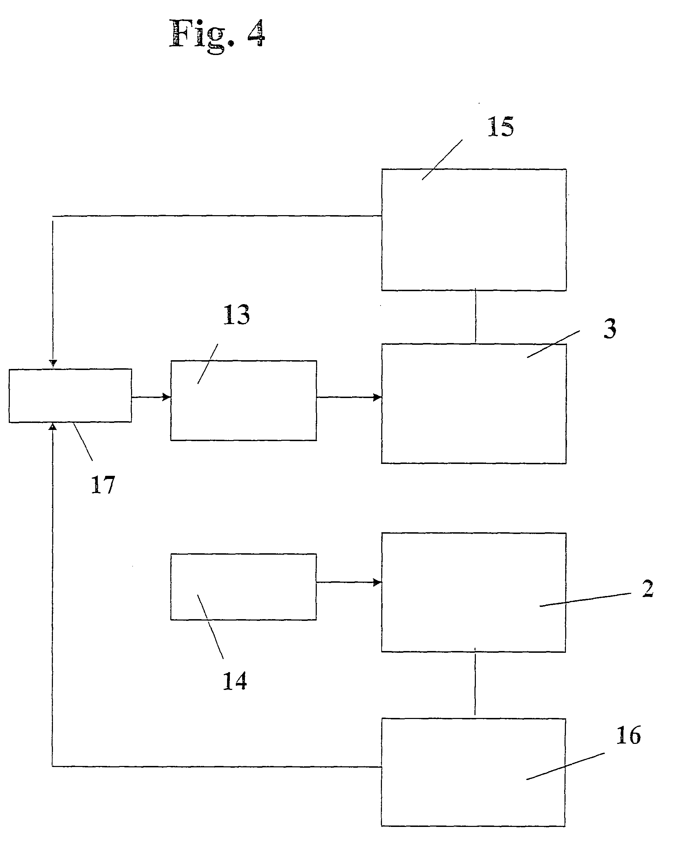

Figure 4 of the accompanying drawings show a block diagram with the principles underlying the control system which the device according to the invention is equipped with. Number 13, 14 schematically refer to motor means controlling, for instance through eccentric cam mechanism 6, the rotation of crown wheel 3 and to motor means controlling the rotation of rotatable member 2, respectively. The device includes sensor means of any type (for instance encoders associated to electric control motors) referred to with numbers 15 and 16, respectively, so as to define - either directly or indirectly - the present angular position of crown wheel 3 and of rotatable member 2. Depending on the signals processed on the basis of said sensor means, an electronic control central unit 17 actuates the adjusting movement of crown wheel 3, until the adjusting position with respect to crown wheels 4, 5 is obtained.

From the description above it can thus be clearly inferred that the device according to the invention can ensure with simple and efficient means a reliable and accurate blocking of the rotatable member, whatever the position it has reached at the end of its rotation, in particular even if in said position teeth 4, 5 are not adjusted with respect to teeth 3.

Obviously, though the basic idea of the invention remains the same, construction details and embodiments can widely vary with respect to what has been described and shown by mere way of example, however without leaving the framework of the present invention.

## Claims

1. Device for controlling a rotatable member (2), comprising:
- a stationary frame (1),
- a member (2) mounted rotatably onto said stationary frame (1) around a rotation axis (1b),
- first motor means (14) for controlling rotation of said rotatable member (2), and
- a device for blocking the rotatable member (2) in the position reached at the end of one of its rotations,
- in which said blocking device comprises:
- a first crown wheel (3) with front teeth carried by said stationary frame (1), and
- a second crown wheel (5) with front teeth carried by the rotatable member (2),
said first and second crown wheels (3, 5) being able to move one with respect to the other ,in an axial direction parallel to the rotation axis (1b) of the rotatable member (2) between a distanced condition in which the rotatable member (2) can freely rotate, and a close position of mutual engagement in which the rotatable member (2) is kept away from rotation,
**characterized in that** the angular position around said rotation axis (1b) of said first crown wheel (3) with respect to the stationary frame (1) is adjustable.

2. Device according to claim 1, **characterized in that** the first crown wheel (3) is mounted with the possibility of at least a limited rotation onto said stationary frame (1) around said rotation axis (1b) of the rotatable member (2), and **in that** it is provided for second motor means (13) for controlling an adjusting rotation of the first crown wheel (3) around said rotation axis (1b).

3. Device according to claim 2, **characterized in that** it comprises:
- first sensor means (16) enabling to define, either directly or indirectly, the angular position reached by the second crown wheel (5) at the end of a rotation of the rotatable member (2),
- second sensor means (15) enabling to define, either directly or indirectly, the angular position of said first crown wheel (3), and
- control means (17) for controlling said second motor means (17) depending on the output signals of the first and second sensor means (15, 16), in order to position the first crown wheel (3) with its teeth (3a) adjusted with respect to the openings between the teeth (5a) of the second crown wheel (5), and thus enable the mutual engagement in said close condition of both crown wheels.

4. Device according to claim 1, **characterized in that** it comprises a third crown wheel (4) stiffly connected to the rotatable member (2) and arranged coaxially to the first crown wheel (3), basically coplanar to it, so that in the aforesaid close condition the second crown wheel (5) engages both the first crown wheel (3) and the third crown wheel (4).

5. Device according to claim 4, **characterized in that** said first and third crown wheels (3, 4) have the same number of teeth.

6. Device according to claim 4, **characterized in that** said first and second crown wheels (3, 5) have the same number of teeth.

7. Device according to claim 4, **characterized in that** said first and third crown wheels (3, 4) are in an axially stationary position, whereas said second crown wheel (5) is defined by a structure mounted slidingly axially onto the rotatable member (2).

8. Device according to claim 2, **characterized in that** said motor means are connected to said first crown wheel (3) by means of a drive including an eccentric cam mechanism (6).
